# EUROPÄISCHE PATENTSCHRIFT

(11) **EP 3 265 360 B1**
(45) Veröffentlichungstag und Bekanntmachung des Hinweises auf die Patenterteilung: **12.12.2018**
(21) Anmeldenummer: 16715276.8
(22) Anmeldetag: 01.04.2016
(51) Int. Cl.: B61L 25/06, G09G 3/00, B61L 1/20, G06F 3/14, G02B 27/22

(54) **VERFAHREN UND VORRICHTUNG ZUM ANZEIGEN EINES PROZESSGESCHEHENS ZUMINDEST EINER EISENBAHNSICHERUNGSEINRICHTUNG SOWIE EISENBAHNSICHERUNGSSYSTEM MIT EINER DERARTIGEN VORRICHTUNG**
METHOD AND DEVICE FOR DISPLAYING A COURSE OF A PROCESS OF AT LEAST ONE RAILWAY SAFETY UNIT, AND RAILWAY SAFETY SYSTEM HAVING SUCH A DEVICE
PROCÉDÉ ET DISPOSITIF POUR L'AFFICHAGE D'UNE PROCÉDURE D'AU MOINS UN ÉQUIPEMENT DE SÉCURITÉ FERROVIAIRE ET SYSTÈME DE SÉCURITÉ FERROVIAIRE COMPRENANT UN DISPOSITIF DE CE TYPE

(30) Priorität: 05.05.2015 DE 102015208273
(43) Veröffentlichungstag der Anmeldung: 10.01.2018
(73) Patentinhaber: Siemens Mobility GmbH, 81739 München (DE)
(72) Erfinder: BURKHARDT, Marc, 38102 Braunschweig (DE)
(86) Internationale Anmeldenummer: PCT/EP2016/057179
(87) Internationale Veröffentlichungsnummer: WO 2016/177518

(56) Entgegenhaltungen:
- EP-A2- 0 448 134
- DE-A1- 2 536 045
- DE-A1- 3 019 713
- DE-A1- 10 330 115
- DE-A1-102012 217 291

## Beschreibung

Wenn für ein Bedien- und Anzeigesystem für elektronische Stellwerke oder für Relaisstellwerke mit Fernsteuerung im Sinne der CENELEC-Norm 50129 SIL 4 eine sichere Anzeige benötigt wird, so ist das Redundanzrechner Prinzip mit einem signaltechnisch sicheren Rechner als Vergleicher heute ein gängiges Verfahren.

Ein derartiges Verfahren ist beispielsweise aus der deutschen Patentanmeldung DE 43 32 143 A1 bekannt. Dabei werden von zumindest einer Eisenbahnsicherungseinrichtung (Weiche, Signal, Bahnübergang etc.) angelieferte Prozessdaten unter Verwendung zweier signaltechnisch nicht sicherer Rechner (Bedienplatzrechner und Referenzrechner) durch zweikanalige Verarbeitung in erste und zweite Abbilddaten des anzuzeigenden Prozessgeschehens umgesetzt. Der Bedienplatzrechner und der Referenzrechner bilden also Verarbeitungskanäle, in denen die angelieferten Prozessdaten - also die gleichen Ursprungsdaten - unabhängig voneinander in die ersten und zweiten Abbilddaten des anzuzeigenden Prozessgeschehens umgesetzt werden, wobei jedoch nur die ersten Abbilddaten zum Anzeigen an ein Datenanzeigegerät ausgegeben werden. Um zu kontrollieren, ob die für die Darstellung ausgegebenen ersten Abbilddaten nicht verfälscht wurden, werden über die ersten und zweiten Abbilddaten nach einem an sich bekannten mathematischen oder sonstigen Abbildungsverfahren getrennte, von der Datenmenge her reduzierte Prüfdaten gebildet. Die Prüfdaten werden dann mittels des Vergleichers auf inhaltliche Übereinstimmung geprüft, wobei etwaige Abweichungen das Vorhandensein einer Störung anzeigen. Bei dem sicherheitskritischen Bedien- und Anzeigesystem wird also der Inhalt des dem Grafiksystem nachgeschalteten Bildspeichers ausgelesen, eine Signatur gebildet und mit einer durch einen Referenzrechner auf gleiche Weise gebildeten Signatur in dem sicheren Rechner verglichen. Bildschirmspeicherfehler oder Rechenfehler auf Grund von Speicherfehlern, die zu einer Falschdarstellung führen würden, sollen dadurch offenbart werden.

Die Erfindung betrifft ein Verfahren zum Anzeigen eines Prozessgeschehens zumindest einer Eisenbahnsicherungseinrichtung, bei dem von der zumindest einen Eisenbahnsicherungseinrichtung angelieferte Prozessdaten unter Verwendung zumindest einer Gerätesteuerung durch zweikanalige Verarbeitung in erste und zweite Abbilddaten des anzuzeigenden Prozessgeschehens umgesetzt und diese zum Anzeigen an ein Datenanzeigegerät ausgegeben werden.

Ein derartiges Verfahren ist beispielsweise aus der Beschreibungseinleitung der vorstehend gewürdigten deutschen Patentanmeldung DE 43 32 143 A1 bekannt. Bei diesem bekannten Verfahren erfolgt die zweikanalige Verarbeitung mittels zweier voneinander völlig unabhängiger Gerätesteuerungen und die ersten und zweiten Abbilddaten werden im Wechsel auf das eine Datenanzeigegerät aufgeschaltet. Die Umschaltfrequenz beträgt dabei etwa 1 Hz. Solange beide Gerätesteuerungen dem dort als Sichtgerät bezeichneten Datenanzeigegerät übereinstimmende Abbilddaten zuführen, wird dem Beobachter ein stehendes Abbild vermittelt. Dies ist ein Zeichen dafür, dass die Abbilddaten und deren angezeigte Darstellung dem Prozessgeschehen entsprechen. Weichen die an das Datenanzeigegerät ausgegebenen Abbilddaten jedoch voneinander ab, so blinken die Darstellung oder Teile der Darstellung der Abbilddaten im Rhythmus der Umschaltfrequenz. Dies unterrichtet einen Beobachter davon, dass das vermittelte Abbild des Prozessgeschehens nicht dem tatsächlichen Prozessgeschehen entspricht. Als Folge davon darf er fortan sicherheitskritische Kommandos, deren Zulässigkeit durch ein Stellwerk nicht mehr geprüft wird, nicht mehr ausgeben. Hierbei sind zusätzliche Kennzeichen erforderlich, um dem Beobachter anzuzeigen, dass die Darstellung tatsächlich im Wechsel aus den beiden Gerätesteuerungen gespeist wird und nicht etwa störungsbedingt aus nur einer der Gerätesteuerungen kommt.

Aus der europäischen Patentschrift EP 0 448 134 A2 ist der Betrieb einer Einrichtung zur optischen Überwachung eines Geschehens auf einer Meldetafel bekannt. Hier dienen Leuchtdioden, die unterhalb einer ein Gleiselement darstellenden Schablone angeordnet sind, zur Ausleuchtung von Meldefeldern zumindest eines Mosaikbausteins der Meldetafel. Gesteuert werden die Leuchtdioden über zwei Steuerbausteine, von denen der eine von einem zentralen Ansteuerrechner Steueranweisungen zur ausschließlichen Steuerung eines Teiles der Leuchtdioden und der andere von dem zentralen Ansteuerrechner Steueranweisungen zur ausschließlichen Steuerung der übrigen Leuchtdioden erhält, wobei die Zuordnung der Steueranweisungen zu den beiden Steuerbausteinen zyklisch vertauscht wird.

Außerdem ist aus der deutschen Offenlegungsschrift DE 103 30 115 A1 ein Verfahren bekannt, bei dem Stellwerkszustände in Form von Telegrammen über zwei physikalisch getrennte Kanäle in Videosignale zur Anzeige der Stellwerkszustände in Form von Zustandsbildern umgewandelt werden. Dabei sind die Ausgänge der beiden Kanäle mit zwei physikalisch getrennten Eingängen eines dem Monitor vorgeschalteten Umschalters verbunden, durch den die Zustandsbilder und damit die Systemzustände zyklisch abwechselnd auf den Monitor geschaltet werden. Weiterhin ist aus der deutschen Offenlegungsschrift DE 10 2012 217 291 A1 ein Verfahren zur Fehleroffenbarung bei einem Stellwerksrechnersystem bekannt, bei dem ein erster und ein zweiter Rechnerkanal sehr unterschiedliche Algorithmen für die Signalverarbeitung von Zustandsinformationen einer Eisenbahnsicherungsanlage verwenden. Dabei erzeugen Ausgangssignale des ersten Rechnerkanals ein Zustandsbild und Ausgangssignale des zweiten Rechnerkanals ein Gefährdungsanalysebild, wobei das Zustandsbild und das Gefährdungsanalysebild auf einem Display überlagert werden.

Darüber hinaus ist aus der deutschen Offenlegungsschrift DE 30 19 713 A1 bekannt, Statusmeldungen einer zu steuernden Einrichtung, die beispielsweise ein Stellwerk sein kann, über eine erste Statusleitung an einen ersten Rechner eines sicheren Mehrrechnersystems und über eine zweite Statusleitung an einen zweiten Rechner des Mehrrechnersystems zu übertragen. Dabei ist mit jedem der beiden Rechner ein Bildgenerator verbunden, der die vom jeweiligen Rechner erarbeiteten Informationen auf einem Datensichtgerät sichtbar machen kann. Über einen Umschalter wird abwechselnd der dem ersten Rechner zugeordnete Bildgenerator oder der dem zweiten Rechner zugeordnete Bildgenerator mit dem Datensichtgerät verbunden.

Ferner schlägt die deutschen Offenlegungsschrift 25 36 045 A1 vor, funktionsfehlersicher anzuzeigende Ziffern und/oder Anzeigesymbole, welche jeweils aus zwei Teilziffern bzw. zwei Teilanzeigesymbolen ausgebildet sind, auf einem Display anzuordnen und dabei die zwei Teilziffern bzw. die zwei Teilanzeigesymbole über zwei getrennte elektrische Schaltungen anzusteuern.

Der Erfindung liegt die Aufgabe zu Grunde, das Anzeigen des Prozessgeschehens einer Eisenbahnsicherungseinrichtung zu vereinfachen.

Gelöst wird diese Aufgabe mit einem Verfahren zum Anzeigen eines Prozessgeschehens zumindest einer Eisenbahnsicherungseinrichtung gemäß dem Patentanspruch 1, bei dem von der zumindest einen Eisenbahnsicherungseinrichtung angelieferte Prozessdaten unter Verwendung zumindest einer Gerätesteuerung durch zweikanalige Verarbeitung in erste und zweite Abbilddaten des anzuzeigenden Prozessgeschehens umgesetzt und diese zum Anzeigen an ein Datenanzeigegerät ausgegeben werden und bei dem eine Anzeigebrille mit einer ersten und einer zweiten Anzeige als Datenanzeigegerät verwendet wird, wobei die erste Anzeige eine vom rechten Auge visuell erfassbare erste Darstellung der ihr zugeführten ersten Abbilddaten anzeigt und wobei die zweite Anzeige eine zur ersten Darstellung redundante, vom linken Auge visuell erfassbare zweite Darstellung der ihr zugeführten zweiten Abbilddaten anzeigt.

In vorteilhafter Weise kann nun der Beobachter ohne zusätzliche Kennzeichen feststellen, ob ihm sowohl die Darstellung der ersten Abbilddaten als auch die Darstellung der zweiten Abbilddaten angezeigt wird. Aufgrund seiner Fähigkeit zum sensorischen Binokularsehen, insbesondere zum stereoskopischen Sehen, ist der Beobachter außerdem in der Lage festzustellen, ob die ihm angezeigten Darstellungen gleich sind.

Der Einsatz der Anzeigebrille mit einer ersten und einer zweiten Anzeige als Datenanzeigegerät bieten also die Möglichkeit, den Beobachter als sicheren Vergleicher zu nutzen, denn die ersten und zweiten Abbilddaten werden zunächst auf unterschiedlichem Weg - nämlich zweikanalig; also unter Verwendung zweier unabhängiger Verarbeitungskanäle der zumindest einen Gerätesteuerung - erzeugt und dann der Anzeigebrille zugeführt und von dieser in Form zweier redundanter Darstellungen angezeigt. Da der Beobachter die beiden redundanten Darstellungen gleichzeitig visuell wahrnehmen kann, kann er Fehler, die bei der Umsetzung der Prozessdaten in die Abbilddaten entstehen, aber auch Fehler, die erst bei der Anzeige der Abbilddaten entstehen, erkennen.

Unter einer Anzeigebrille mit einer ersten und einer zweiten Anzeige wird dabei insbesondere ein am Kopf befestigtes visuelles Datenanzeigegerät "HMD" (lang "Head-Mounted Display") verstanden, das die Darstellungen der ersten und zweiten Abbilddaten entweder auf zwei augennahen Bildschirmen präsentiert oder diese direkt auf die Netzhäute der beiden Augen des Beobachters (des Benutzers der Anzeigebrille) projiziert.

Das Prinzip der erfindungsgemäßen sicheren Anzeige besteht also darin, dass die Anzeigebrille zum Einsatz kommt, bei der ein rechtes und ein linke Abbild des anzuzeigenden Prozessgeschehens für das rechte und linke Auge getrennt erzeugt werden, wobei für den sicheren Vergleich die Fähigkeit zum Binokularsehen, insbesondere zum stereoskopischen Sehen des Beobachters (des Benutzers der Anzeigebrille) verwendet wird.

Wo bei dem aus der Druckschrift DE 43 32 143 A1 bekannten herkömmlichen Verfahren der Beobachter bei der Fehlerdetektion außen vor bleibt und ihm nur ein Abbild auf nur einem Bildschirm dargestellt wird (rechtes und linkes Auge sehen den selben Bildschirm), können bei dem erfindungsgemäßen Verfahren durch die Verwendung der mit zwei Datenanzeigegeräten ausgestatteten Anzeigebrille die binokularen, insbesondere stereoskopischen, Fähigkeiten des Benutzers einbezogen werden. Der Benutzer der Anzeigebrille überprüft die bildliche Übereinstimmung von zwei unterschiedlichen Anzeigen, indem dem rechten und dem linken Auge jeweils unterschiedlich erzeugte Darstellungen der Anzeigedaten - also Anzeigen - mit vermeintlich gleichem Inhalt dargestellt werden. Kommt es zu einem Anzeigenfehler in einer der beiden Darstellungen, so kommt es in der binokularen, insbesondere stereoskopischen, Sicht nicht zu einer Überdeckung der gleichen Information, so dass der Benutzer den Fehler erkennen kann.

Hierzu werden die anzuzeigenden Darstellungen der ersten und zweiten Abbilddaten, die Abbildern des Prozessgeschehens entsprechen, zweimal errechnet und über zwei Kommunikationswege den zwei unterschiedlichen Datenanzeigegeräten zugeführt. Anzeigefehler der Hardware können so durch die redundante Auslegung der Anzeige offenbart werden. Die redundanten Verarbeitungskanäle können dabei auf einer Gerätesteuerung in Form einer Recheneinheit oder auf zwei Gerätesteuerungen in Form zweier Recheneinheiten (beispielsweise "Bedienplatzrechner" und "Referenzrechner") ausgebildet sein. Die ersten und zweiten Abbilddaten können also auf einer Recheneinheit oder auf zwei getrennten Recheneinheiten errechnet werden.

Mit dem erfindungsgemäßen Verfahren kann damit sowohl auf eine zweite Recheneinheit ("Referenzrechner") als auch auf einen sicheren Vergleicher verzichtet werden. Dies reduziert die Komplexität des Systems erheblich.

Es wird als vorteilhaft angesehen, wenn die angelieferten Prozessdaten in Abschnitten der zweikanaligen Verarbeitung in rechte und linke Abbilddaten umgesetzt werden, die zur monoskopischen Betrachtung aus dem gleichen Blickwinkel erzeugten Abbildern des Prozessgeschehens entsprechen.

Dann können die rechten Abbilddaten als die ersten Abbilddaten und die linken Abbilddaten als die zweiten Abbilddaten an die Anzeigebrille ausgegeben werden. Der Beobachter kann dann die beiden Abbilder des Prozessgeschehens zumindest simultan (erste Stufe des sensorischen Binokularsehens); in der Regel jedoch zu einem einzigen Bild verschmolzen (zweite Stufe des sensorischen Binokularsehens) wahrnehmen.

Alternativ hierzu können die rechten und die linken Abbilddaten in weiteren Abschnitten der zweikanaligen Verarbeitung in weitere rechte und linke Abbilddaten umgesetzt werden, die zur stereoskopischen Betrachtung aus unterschiedlichen Blickwinkeln erzeugten Abbildern des Prozessgeschehens entsprechenden.

Dann können die weiteren rechten Abbilddaten als die ersten Abbilddaten und die weiteren linken Abbilddaten als die zweiten Abbilddaten an die Anzeigebrille ausgegeben werden. Der Beobachter kann dann die beiden Abbilder des Prozessgeschehens zu einem einzigen räumlichen Bild verschmolzen (dritte Stufe des sensorischen Binokularsehens) wahrnehmen.

Das erfindungsgemäße Verfahren kann damit auch sofort dafür genutzt werden, dreidimensionale Bedienoberflächen in einer virtuellen oder erweiterten Realität mit einer sicheren Anzeige auszustatten. Denn auch wenn die darzustellenden ersten und zweiten Abbilddaten, die zwei getrennten Abbildern des Prozessgeschehens entsprechen, für den stereoskopischen Effekt im Blickwinkel versetzt errechnet werden, so treten Fehler, die bei der Umsetzung der Prozessdaten in die Abbilddaten entstehen, aber auch Fehler, die erst bei der Anzeige der Abbilddaten entstehen, auch in der stereoskopischen Sicht - also bei der Fusion der beiden Abbilder zu einem einzigen räumlichen Bild - sofort zu Tage.

Die Erfindung betrifft auch eine Vorrichtung zum Anzeigen eines Prozessgeschehens zumindest einer Eisenbahnsicherungseinrichtung mit zumindest einer Gerätesteuerung und mit einem Datenanzeigegerät, bei der die zumindest eine Gerätesteuerung geeignet ausgebildet ist, von der zumindest einen Eisenbahnsicherungseinrichtung angelieferte Prozessdaten durch zweikanalige Verarbeitung in erste und zweite Abbilddaten des anzuzeigenden Prozessgeschehens umzusetzen und diese zum Anzeigen an das Datenanzeigegerät auszugeben.

Der Erfindung liegt die Aufgabe zu Grunde, eine Vorrichtung zum Anzeigen eines Prozessgeschehens einer Eisenbahnsicherungseinrichtung anzugeben, welche ein vereinfachtes Anzeigen des Prozessgeschehens ermöglicht.

Zur Lösung dieser Aufgabe dient eine Vorrichtung zum Anzeigen eines Prozessgeschehens zumindest einer Eisenbahnsicherungseinrichtung gemäß Patentanspruch 6. Diese weist zumindest eine Gerätesteuerung und ein Datenanzeigegerät auf. Die zumindest eine Gerätesteuerung ist geeignet ausgebildet, von der zumindest einen Eisenbahnsicherungseinrichtung angelieferte Prozessdaten durch zweikanalige Verarbeitung in erste und zweite Abbilddaten des anzuzeigenden Prozessgeschehens umzusetzen und diese zum Anzeigen an das Datenanzeigegerät auszugeben. Das Datenanzeigegerät ist eine Anzeigebrille mit einer ersten und einer zweiten Anzeige, wobei die erste Anzeige geeignet ausgebildet ist, eine vom rechten Auge visuell erfassbare erste Darstellung der ihr zugeführten ersten Abbilddaten anzuzeigen und wobei die zweite Anzeige geeignet ausgebildet ist, eine zur ersten Darstellung redundante, vom linken Auge visuell erfassbare zweite Darstellung der ihr zugeführten zweiten Abbilddaten anzuzeigen.

Die erfindungsgemäße Anordnung hat sinngemäß dieselben Vorteile, wie sie oben beschrieben bereits im Zusammenhang mit der Erläuterung des erfindungsgemäßen Verfahrens angegeben worden sind.

Außerdem betrifft die Erfindung ein Eisenbahnsicherungssystem mit einer derartigen Vorrichtung.

Die Erfindung wird im Weiteren anhand der Figuren näher erläutert. Dabei zeigen die
- Figur 1: eine schematische Darstellung eines Eisenbahnsicherungssystem mit einer ersten Ausführungsform der erfindungsgemäßen Vorrichtung zum Anzeigen eines Prozessgeschehens zumindest einer Eisenbahnsicherungseinrichtung und die
- Figur 2: eine schematische Darstellung eines weiteren erfindungsgemäßen Eisenbahnsicherungssystem mit einer zweiten Ausführungsform der erfindungsgemäßen Vorrichtung zum Anzeigen eines Prozessgeschehens zumindest einer Eisenbahnsicherungseinrichtung.

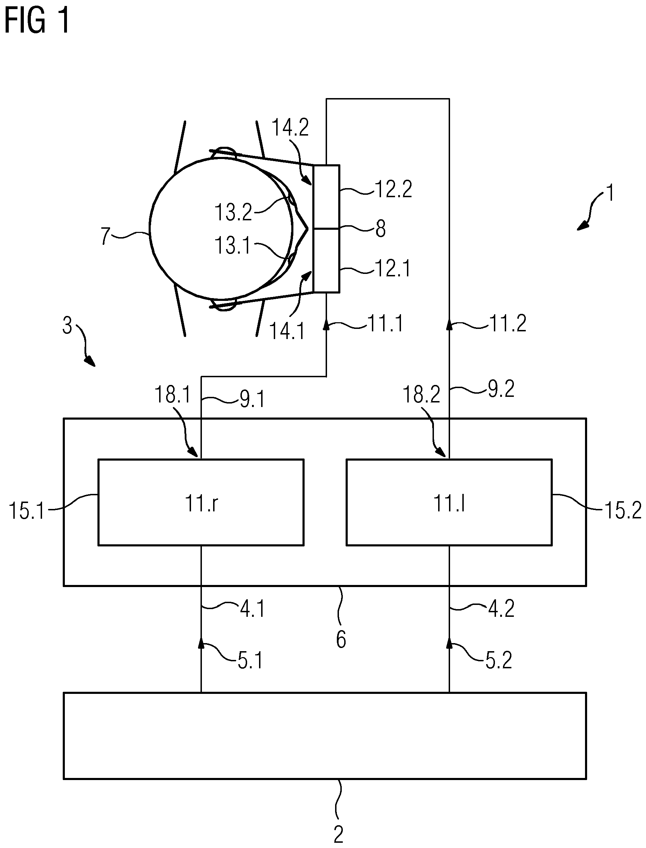

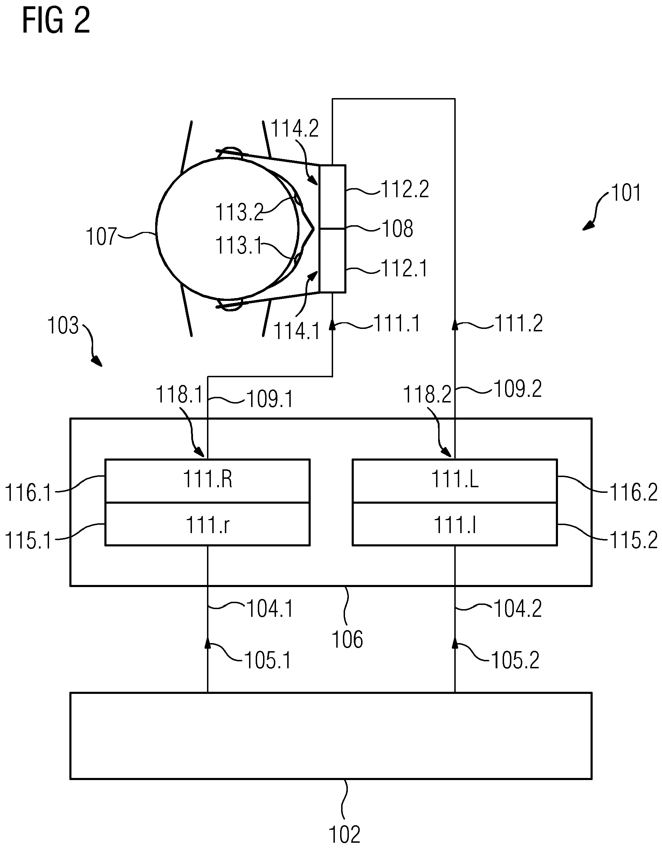

Die in den Figuren 1 und 2 gezeigte Eisenbahnsicherungssysteme 1; 101 weisen zumindest einer Eisenbahnsicherungseinrichtung 2; 102 eine Vorrichtung 3; 103 zum Anzeigen eines Prozessgeschehens der zumindest einen Eisenbahnsicherungseinrichtung 1; 101 und getrennte Datenübertragungskanäle 4.1, 4.2; 104.1, 104.2 auf. Dabei ist die zumindest eine Eisenbahnsicherungseinrichtung 1; 101, die eine Weiche, ein Signal, ein Bahnübergang etc. eines Stellwerkes oder auch eines Zugbeeinflussungssystems sein kann, geeignet ausgebildet, ihrem Prozessgeschehen entsprechende Prozessdaten 5.1, 5.2; 105.1, 105.2 über die getrennten Datenübertragungskanäle 4.1, 4.2; 104.1, 104.2 an die Vorrichtung 3; 103 auszugeben. Die Vorrichtung 3; 103 zum Anzeigen des Prozessgeschehens ist geeignet ausgebildet, anhand der angelieferten Prozessdaten 5.11, 5.2; 105.1, 105.2 das Prozessgeschehen der zumindest einen Eisenbahnsicherungseinrichtung 1; 101 anzuzeigen.

Hierzu weist die Vorrichtung 3; 103 zum Anzeigen des Prozessgeschehens eine Gerätesteuerung 6; 106, ein von einem Benutzer 7; 107 (Beobachter, z.B. Fahrdienstleiter) am Kopf getragene Datenanzeigegerät 8; 108 sowie getrennte weitere Datenübertragungskanäle 9.1, 9.2; 109.1, 109.2 auf.

Die zumindest eine Gerätesteuerung 6; 106 ist geeignet ausgebildet, die von der zumindest einen Eisenbahnsicherungseinrichtung 1; 101 angelieferten Prozessdaten 5.1, 5.2; 105.1, 105.2 durch zweikanalige Verarbeitung in erste und zweite Abbilddaten 11.1, 11.2; 111.1, 111.2 in Form von Videodaten des anzuzeigenden Prozessgeschehens umzusetzen und zum Anzeigen an das Datenanzeigegerät 8; 108 auszugeben.

Das Datenanzeigegerät 8; 108 ist eine Anzeigebrille in Form eines Head-Mounted Displays (kurz HMD) mit zwei getrennten Anzeigen 12.1, 12.2; 112.1, 112.2 in Form zweier getrennter Bildschirme. Dabei ist eine erste 12.1; 112.1 der beiden Anzeigen geeignet ausgebildet, eine vom rechten Auge 13.1 visuell erfassbare erste Darstellung 14.1; 114.1 der ihr zugeführten ersten Abbilddaten 11.1; 111.1 anzuzeigen. Die zweite 12.2; 112.2 der beiden Anzeigen ist geeignet ausgebildet, eine vom linken Auge 13.2; 113.2 visuell erfassbare zweite Darstellung 14.2; 114.2 der ihr zugeführten zweiten Abbilddaten 11.2; 111.2 anzuzeigen.

Die zumindest eine Gerätesteuerung 6; 106 ist dabei geeignet ausgebildet, die angelieferten Prozessdaten 5.1, 5.2; 105.1, 105.2 in Abschnitten 15.1, 15.2; 115.1, 115.2 der zweikanaligen Verarbeitung in rechte und linke Abbilddaten umzusetzen, die zur monoskopischen Betrachtung aus dem gleichen Blickwinkel erzeugten Abbildern des Prozessgeschehens entsprechen.

Bei der in der Figur 1 gezeigten ersten Ausführungsform der Vorrichtung 3 zum Anzeigen eines Prozessgeschehens ist die Gerätesteuerung 6 geeignet ausgebildet, die rechten Abbilddaten als erste Abbilddaten und die linken Abbilddaten als zweite Abbilddaten 11.1, 11.2 an die Anzeigebrille 8 auszugeben.

Im Unterschied hierzu ist die Gerätesteuerung 106 bei der in der Figur 2 gezeigten zweiten Ausführungsform der Vorrichtung 103 zum Anzeigen des Prozessgeschehens geeignet ausgebildet, die rechten und die linken Abbilddaten in weiteren Abschnitten 116.1, 116.2 der Verarbeitung in weitere rechte und linke Abbilddaten umzusetzen, die zur stereoskopischen Betrachtung aus unterschiedlichen Blickwinkeln erzeugten Abbildern des Prozessgeschehens entsprechenden. Im Unterschied zu der in der Figur 1 gezeigten Gerätesteuerung 6 ist die in der Figur 2 gezeigte Gerätesteuerung 106 geeignet ausgebildet, die weiteren rechten Abbilddaten als die ersten Abbilddaten 112.1 und die weiteren linken Abbilddaten als die zweiten Abbilddaten 112.2 an die Anzeigebrille auszugegeben.

Das erfindungsgemäße Verfahren wird entsprechend wie folgt durchgeführt.

Die zumindest eine Eisenbahnsicherungseinrichtung 2; 102 liefert über die getrennten Datenübertragungskanäle 4.1, 4.2; 104.1, 104.2 vorzugsweise fortlaufend jeweils die gleichen Prozessdaten 5.1, 5.2; 105.1, 105.2 an die Vorrichtung 3; 103 zum Anzeigen des Prozessgeschehens.

Diese von der zumindest einen Eisenbahnsicherungseinrichtung angelieferten Prozessdaten 3; 103 werden unter Verwendung der zumindest einen als Recheneinheit ausgebildeten Gerätesteuerung 6; 106 zweikanalig - also mittels zweier getrennter Verarbeitungskanäle 18.1, 18.2; 118.1, 118.2 der Gerätesteuerung - verarbeitet. Dabei werden die angelieferten Prozessdaten 5.1, 5.2; 105.1, 105.2 in den Abschnitten 15.1, 15.2; 115.1, 115.2 der zweikanaligen Verarbeitung in die rechten und linken Abbilddaten 11.r, 11.1; 111.r, 111.1 in Form von Videodaten umgesetzt, die zur monoskopischen Betrachtung aus dem gleichen Blickwinkel erzeugten Abbildern des Prozessgeschehens entsprechen. Die angelieferten Prozessdaten 5.1; 105.1 werden also in dem Abschnitt 15.1; 115.1 vom ersten Verarbeitungskanal 18.1; 118.1 in die rechten Abbilddaten 11.r; 111.r umgesetzt. Und die Prozessdaten 5.2; 105.2, die den Prozessdaten 5.1; 105.1 gleichen, werden in dem Abschnitt 15.2; 115.2 vom zweiten Verarbeitungskanal 18.2; 118.2 in die linken Abbilddaten 11.1; 111.1 umgesetzt.

Anschließend werden bei der in der Figur 1 gezeigten ersten Ausführungsform der Vorrichtung 3 die rechten Abbilddaten 11.r als erste Abbilddaten 11.1 und die linken Abbilddaten 11.1 als zweite Abbilddaten 11.2 über die weiteren getrennten Datenübertragungskanäle 9.1, 9.2 an die als Datenanzeigegerät 8 verwendete Anzeigebrille ausgegeben.

Daraufhin zeigt die erste Anzeige 12.1 der Anzeigebrille 8 eine vom rechten Auge 13.1 visuell erfassbare erste Darstellung 14.1 der ihr als Videodaten zugeführten ersten Abbilddaten 11.1 an und die zweite Anzeige 12.2 der Anzeigebrille 8 zeigt eine vom linken Auge 13.2 visuell erfassbare zweite Darstellung 14.2 der ihr als Videodaten zugeführten zweiten Abbilddaten 11.2 an.

Der die Anzeigebrille 8 tragender Beobachter 7 nimmt die beiden angezeigten Darstellungen 14.1, 14.2 der Abbilddaten 11.1, 11.2 - also die beiden Abbilder des Prozessgeschehens - zumindest simultan; in der Regel jedoch zu einem einzigen Bild verschmolzen wahr.

Bei der in der Figur 2 gezeigten zweiten Ausführungsform 103 der Vorrichtung werden die rechten und die linken Abbilddaten 111.r, 111.1 in den weiteren Abschnitten 116.1, 116.2 der zweikanaligen Verarbeitung in die weiteren rechten und linken Abbilddaten 111.R, 111.L umgesetzt werden, die zur stereoskopischen Betrachtung aus unterschiedlichen Blickwinkeln erzeugten Abbildern des Prozessgeschehens entsprechenden. Die rechten Abbilddaten 111.r werden also in dem weiteren Abschnitt 116.1 vom ersten Verarbeitungskanal 118.1 in die weiteren rechten Abbilddaten 111.R umgesetzt. Und die linken Abbilddaten 111.1 werden in dem Abschnitt 116.2 vom zweiten Verarbeitungskanal 118.2 in die weiteren linken Abbilddaten 111.L umgesetzt.

Anschließend werden die weiteren rechten Abbilddaten 111.R als die ersten Abbilddaten 111.1 und die weiteren linken Abbilddaten 111.L als die zweiten Abbilddaten 111.2 an die Anzeigebrille ausgegeben.

Auch hier zeigt nun die erste Anzeige 112.1 der Anzeigebrille 108 eine vom rechten Auge 113.1 visuell erfassbare erste Darstellung 114.1 der ihr als Videodaten zugeführten ersten Abbilddaten 111.1 an und die zweite Anzeige 112.2 der Anzeigebrille 108 zeigt eine vom linken Auge 113.2 visuell erfassbare zweite Darstellung 114.2 der ihr als Videodaten zugeführten zweiten Abbilddaten 111.2 an.

Der die Anzeigebrille 108 tragender Beobachter 107 nimmt die beiden angezeigten Darstellungen 114.1, 114.2 der Abbilddaten 111.1, 111.2 - also die beiden Abbilder des Prozessgeschehens - auch hier zumindest simultan; in der Regel jedoch zu einem einzigen räumlichen Bild verschmolzen wahr.

Der Benutzer 7; 107 der Anzeigebrille 8; 108 überprüft die bildliche Übereinstimmung der beiden redundanten Darstellungen 14.1, 14.2; 114.1, 114.2. Hierzu prüft er, ob sich die bildlichen Informationen der beiden angezeigten, vermeintlich gleichen Abbilder des Prozessgeschehens tatsächlich überdecken. Bei einem Fehler bei der Umsetzung der Prozessdaten 5.1, 5.2; 105.1, 105.2 in die Abbilddaten 11.1, 11.2; 111.1, 111.2 oder bei einem Fehler bei der Darstellung der Abbilddaten 11.1, 11.2; 111.1, 111.2 kommt es in der binokularen, insbesondere stereoskopischen, Sicht nicht zu einer Überdeckung der bildlichen Information, so dass der Beobachter 7; 107 den Fehler erkennen kann.

## Patentansprüche

1. Verfahren zum Anzeigen eines Prozessgeschehens zumindest einer Eisenbahnsicherungseinrichtung (2; 102),
bei dem von der zumindest einen Eisenbahnsicherungseinrichtung (2; 102) angelieferte Prozessdaten (5.1, 5.2; 105.1, 105.2) unter Verwendung zumindest einer Gerätesteuerung (6; 106) durch zweikanalige redundante Verarbeitung in erste und zweite Abbilddaten (11.1, 11.2; 111.1, 111.2) des anzuzeigenden Prozessgeschehens umgesetzt und diese zum Anzeigen an ein Datenanzeigegerät (8; 108) ausgegeben werden,
**dadurch gekennzeichnet, dass** eine Anzeigebrille mit einer ersten und einer zweiten Anzeige (12.1, 12.2; 112.1, 112.2) als Datenanzeigegerät verwendet wird,
wobei die erste Anzeige (12.1; 112.1) eine vom rechten Auge (13.1; 113.1) visuell erfassbare erste Darstellung (14.1; 114.1) der ihr zugeführten ersten Abbilddaten (11.1; 111.1) anzeigt und
wobei die zweite Anzeige (12.2; 112.2) eine zur ersten Darstellung redundante, vom linken Auge (13.2; 113.2) visuell erfassbare zweite Darstellung (14.2; 114.2) der ihr zugeführten zweiten Abbilddaten (11.2; 111.2) anzeigt.

2. Verfahren nach Anspruch 1,
**dadurch gekennzeichnet, dass**
die angelieferten Prozessdaten (5.1, 5.2; 105.1, 105.2) in Abschnitten (15.1, 15.2; 115.1, 115.2) der zweikanaligen Verarbeitung in rechte und linke Abbilddaten (11.r, 11.1; 111.r, 111.1) umgesetzt werden, die zur monoskopischen Betrachtung aus dem gleichen Blickwinkel erzeugten Abbildern des Prozessgeschehens entsprechen.

3. Verfahren nach Anspruch 2,
**dadurch gekennzeichnet, dass**
die rechten Abbilddaten (11.r) als die ersten Abbilddaten (11.1) und die linken Abbilddaten (11.1) als die zweiten Abbilddaten (11.2) an die Anzeigebrille (8) ausgegeben werden.

4. Verfahren nach Anspruch 2,
**dadurch gekennzeichnet, dass**
die rechten und die linken Abbilddaten (111.r, 111.1) in weiteren Abschnitten (116.1, 116.2) der zweikanaligen Verarbeitung in weitere rechte und linke Abbilddaten (111.R, 111.L) umgesetzt werden, die zur stereoskopischen Betrachtung aus unterschiedlichen Blickwinkeln erzeugten Abbildern des Prozessgeschehens entsprechenden.

5. Verfahren nach Anspruch 4,
**dadurch gekennzeichnet, dass**
die weiteren rechten Abbilddaten (111.R) als die ersten Abbilddaten (111.1) und die weiteren linken Abbilddaten (111.L) als die zweiten Abbilddaten (111.2) an die Anzeigebrille ausgegeben werden.

6. Vorrichtung (3; 103) zum Anzeigen eines Prozessgeschehens zumindest einer Eisenbahnsicherungseinrichtung (2; 102) mit zumindest einer Gerätesteuerung (6; 106) und mit einem Datenanzeigegerät (8; 108),
bei der die zumindest eine Gerätesteuerung (6; 106) geeignet ausgebildet ist, von der zumindest einen Eisenbahnsicherungseinrichtung (2; 102) angelieferte Prozessdaten (5.1, 5.2; 105.1, 105.2) durch zweikanalige redundante Verarbeitung in erste und zweite Abbilddaten (11.1, 11.2; 111.1, 111.2) des anzuzeigenden Prozessgeschehens umzusetzen und diese zum Anzeigen an das Datenanzeigegerät (8; 108) auszugeben, **dadurch gekennzeichnet, dass** das Datenanzeigegerät (8; 108) eine Anzeigebrille mit einer ersten und einer zweiten Anzeige (12.1, 12.2; 112.1, 112.2) ist,
wobei die erste Anzeige (12.1; 112.1) geeignet ausgebildet ist, eine vom rechten Auge (13.1; 113.1) visuell erfassbare erste Darstellung (14.1; 114.1) der ihr zugeführten ersten Abbilddaten (11.1; 111.1) anzuzeigen und
wobei die zweite Anzeige (12.2; 112.2) geeignet ausgebildet ist, eine zur ersten Darstellung redundante, vom linken Auge (13.2; 113.2) visuell erfassbare zweite Darstellung (14.2; 114.2) der ihr zugeführten zweiten Abbilddaten (11.2; 111.2) anzuzeigen.

7. Vorrichtung (3; 103) nach Anspruch 6,
**dadurch gekennzeichnet, dass**
die zumindest eine Gerätesteuerung (6; 106) geeignet ausgebildet ist, die angelieferten Prozessdaten (5.1, 5.2; 105.1, 105.2) in Abschnitten (15.1, 15.2; 115.1, 115.2) der zweikanaligen Verarbeitung in rechte und linke Abbilddaten (11.r, 11.1; 111.r, 111.1) umzusetzen, die zur monoskopischen Betrachtung aus dem gleichen Blickwinkel erzeugten Abbildern des Prozessgeschehens entsprechen.

8. Vorrichtung (3) nach Anspruch 7,
**dadurch gekennzeichnet, dass**
die zumindest eine Gerätesteuerung (6) geeignet ausgebildet ist, die rechten Abbilddaten (11.r) als die ersten Abbilddaten (11.1) und die linken Abbilddaten (11.1) als die zweiten Abbilddaten (11.2) an die Anzeigebrille (8) auszugeben.

9. Vorrichtung (103) nach Anspruch 7,
**dadurch gekennzeichnet, dass**
die zumindest eine Gerätesteuerung (106) geeignet ausgebildet ist, die rechten und die linken Abbilddaten (111.r, 111.1) in weiteren Abschnitten (116.1, 116.2) der zweikanaligen Verarbeitung in weitere rechte und linke Abbilddaten (111.R, 111.L) umzusetzen, die zur stereoskopischen Betrachtung aus unterschiedlichen Blickwinkeln erzeugten Abbildern des Prozessgeschehens entsprechenden.

10. Vorrichtung (103) nach Anspruch 9,
**dadurch gekennzeichnet, dass**
die zumindest eine Gerätesteuerung (106) geeignet ausgebildet ist, die weiteren rechten Abbilddaten (111.R) als die ersten Abbilddaten (111.1) und die weiteren linken Abbilddaten (111.L) als die zweiten Abbilddaten (111.2) an die Anzeigebrille (108) auszugegeben.

11. Eisenbahnsicherungssystem (1; 101) mit zumindest einer Eisenbahnsicherungseinrichtung (2; 102), die geeignet ausgebildet ist, ihrem Prozessgeschehen entsprechende Prozessdaten (5.1, 5.2; 105.1, 105.2) auszugeben, und mit einer Vorrichtung (3; 103), die geeignet ausgebildet ist, anhand der angelieferten Prozessdaten (5.1, 5.2; 105.1, 105.2) das Prozessgeschehens der zumindest einen Eisenbahnsicherungseinrichtung (2; 102 anzuzeigen,
**dadurch gekennzeichnet, dass**
die Vorrichtung (3; 103) nach einem der Ansprüche 6 bis 10 ausgebildet ist.

## Claims

1. Method for displaying a course of a process of at least one railway safety unit (2; 102),
in which while using at least one device control (6, 106), process data (5.1, 5.2; 105.1, 105.2) supplied by the at least one railway safety unit (2; 102,) is converted by means of dual-channel redundant processing into first and second image data (11.1, 11.2; 111.1, 111.2) of the course of the process to be displayed, and is output to be displayed on a data display unit (8; 108),
**characterised in that**
a pair of display goggles having a first and a second display (12.1, 12.2; 112.1, 112.2) is used as a data display unit,
wherein the first display (12.1; 112.1) displays a first representation (14.1; 114.1) of the first image data (11.1; 111.1) delivered thereto that is visually detectable by the right eye (13.1; 113.1), and
wherein the second display (12.2; 112.2) displays a second representation (14.2; 114.2) of the second image data (11.2; 111.2) delivered thereto that is redundant to the first diagram and visually detectable by the left eye (13.2; 113.2).

2. Method according to claim 1,
**characterised in that**
the supplied process data (5.1, 5.2; 105.1, 105.2) is converted in sections (15.1, 15.2; 115.1, 115.2) of the dual-channel processing into right-hand and left-hand image data (11.r, 11.1; 111.r, 111.1) which correspond to images of the course of the process generated from the same perspective for monoscopic examination.

3. Method according to claim 2,
**characterised in that**
the right-hand image data (11.r) is output as the first image data (11.1) and the left-hand image data (11.1) is output as the second image data (11.2) to the display goggles (8).

4. Method according to claim 2,
**characterised in that**
the right-hand and left-hand image data (111.r, 111.1) is converted in further sections (116.1, 116.2) of the dual-channel processing into further right-hand and left-hand image data (111.R, 111.L) which correspond to image data of the course of the process generated from different perspectives for stereoscopic examination.

5. Method according to claim 4,
**characterised in that**
the further right-hand image data (111.R) is output as the first imaged data (111.1) and the further left-hand image data (111.L) is output as the second image data (111.2) to the display goggles.

6. Device (3; 103) for displaying a course of a process of at least one railway safety unit (2; 102) having at least one device control (6; 106) and having a data display unit (8; 108),
in which the at least one device control (6; 106) is suitably designed for converting process data (5.1, 5.2; 105.1, 105.2) supplied by the at least one railway safety unit (2; 102) by means of dual-channel redundant processing into first and second image data (11.1, 11.2; 111.1, 111.2) of the course of the process to be displayed and for outputting this for display on the data display unit (8; 108),
**characterised in that**
the data display unit (8; 108) is a pair of display goggles having a first and a second display (12.1, 12.2; 112.1, 112.2),
wherein the first display (12.1; 112.1) is suitably designed for displaying a first representation (14.1; 114.1) of the first image data (11.1; 111.1) delivered thereto that is visually detectable by the right eye (13.1; 113.1) and
wherein the second display (12.2; 112.2) is suitably designed for displaying a second representation (14.2; 114.2) of the second image data (11.2; 111.2) delivered thereto that is redundant to the first diagram and visually detectable by the left eye (13.2; 113.2).

7. Device (3; 103) according to claim 6,
**characterised in that**
the at least one device control (6; 106) is suitably designed for converting the supplied process data (5.1, 5.2; 105.1, 105.2) in sections (15.1, 15.2; 115.1, 115.2) of the dual-channel processing into right-hand and left-and image data (11.r, 11.1; 111.r, 111.1) which correspond to images of the course of the process generated from the same perspective for monoscopic examination.

8. Device (3) according to claim 7,
**characterised in that**
the at least one device control (6) is suitably designed for outputting the right-hand image data (11.r) as the first image data (11.1) and the left-hand image data (11.1) as the second image data (11.2) to the display goggles (8).

9. Device (103) according to claim 7,
**characterised in that**
the at least one device control (106) is suitably designed for converting the right-hand and left-hand image data (111.r, 111.1) in further sections (116.1, 116.2) of the dual-channel processing into further left-hand and right-hand image data (111.R, 111.L) which correspond to image data of the course of the process generated from different perspectives for stereoscopic examination.

10. Device (103) according to claim 9,
**characterised in that**
the at least one device control (106) is suitably designed for outputting the further right-hand image data (111.R) as the first imaged data (111.1) and the further left-hand image data (111.L) as the second image data (111.2) to the display goggles (108).

11. A railway safety system (1; 101) having at least one railway safety unit (2; 102) which is suitably designed for outputting process data (5.1, 5.2; 105.1, 105.2) corresponding to its course of the process, and having a device (3; 103) which is suitably designed for displaying the course of the process of the at least one railway safety unit (2; 102) using the supplied process data (5.1, 5.2; 105.1, 105.2),
**characterised in that**
the device (3; 103) is designed according to one of claims 6 to 10.

## Revendications

1. Procédé d'affichage d'un évènement de processus d'au moins un dispositif (2; 102) de sécurité ferroviaire,
dans lequel on transforme des données (5.1, 5.2; 105.1, 105.2) fournies par le au moins un dispositif (2; 102) de sécurité ferroviaire, en utilisant au moins une commande (6; 106) d'appareil par un traitement redondant à deux canaux, en des premières et deuxièmes données (11.1, 11.2. 111.1, 111.2) d'image de l'événement de processus à afficher et on les sort pour l'affichage sur un appareil (8; 108) d'affichage de données,
**caractérisé en ce que**
on utilise une lunette d'affichage, ayant un premier et un deuxième affichages (12.1, 12.2; 112.1, 112.2), comme appareil d'affichage de données,
le premier affichage (12.1; 112.1) affichant une première représentation, perceptible visuellement par l'oeil (13.1; 113.1) droit, des premières données (11.1; 111.1) d'image, qui lui sont envoyées et
le deuxième affichage (12.2; 112.2) affichant une deuxième représentation (14.2; 114.2) redondante à la première représentation et perceptible visuellement par l'oeil (13.2; 113.2) gauche des deuxièmes données (11.2; 111.2) d'image, qui lui sont envoyées.

2. Procédé suivant la revendication 1,
**caractérisé en ce que**
l'on transforme les données (5.1, 5.2; 105.1, 105.2) de processus fournies dans des parties (15.1, 15.2; 115.1, 115.2) du traitement à deux canaux en des données (11.r, 11.1; 111.r, 111.1) d'image droite et gauche, qui correspondent à la considération monoscopique d'images de l'événement de processus produites à partir du même angle visuel.

3. Procédé suivant la revendication 2,
**caractérisé en ce que**
l'on émet les données (11.r) d'image droite, comme premières données (11.1) d'image, et les données (11.1) d'image gauche, comme deuxièmes données (11.2) d'image sur la lunette (8) d'affichage.

4. Procédé suivant la revendication 2,
**caractérisé en ce que**
l'on transforme les données (111.r, 111.1) d'image droite et gauche dans d'autres parties (116.1, 116.2) du traitement à deux canaux, en d'autres données (111.R, 111.L) d'image droite et gauche, qui correspondent à la considération stéréoscopique d'images de l'événement de processus produites à partir d'angles visuels différents.

5. Procédé suivant la revendication 4,
**caractérisé en ce que** l'on émet, sur la lunette
d'affichage, les autres données (111.R) d'image droite, comme premières données (111.1) d'image, et les autres données (111.L) d'image gauche, comme deuxièmes données (111.2) d'image.

6. Système (3; 103) d'affichage d'un évènement de processus d'au moins un dispositif (202) de sécurité ferroviaire, comprenant au moins une commande 6; 106) d'appareil et au moins un appareil (8; 108) d'affichage de données,
dans lequel la au moins une commande (6; 106) d'appareil est constituée de manière à transformer des données (5.1, 5.2; 105.1, 105.2) de processus fournies par le au moins un dispositif (2; 102) de sécurité ferroviaire, par un traitement redondant à deux canaux, en des premières et deuxièmes données (11.1, 11.2; 111.1, 111.2) d'image de l'événement de processus à afficher et à les envoyer pour l'affichage à l'appareil (8; 108) d'affichage de données, **caractérisé en ce que**
l'appareil (8; 108) d'affichage de données est une lunette d'affichage ayant un premier et un deuxième affichages (12.1n 12.2; 112.1, 112.2),
le premier affichage (12.1; 112.1) étant constitué pour afficher une première représentation (14.1; 114.1) perceptible visuellement par l'oeil droit, des premières données (11.1; 111.1) d'image qui sont envoyées et
le deuxième affichage (12.2; 112.2) étant constitué pour afficher une deuxième représentation (14.2; 114.2) redondante à la première représentation et perceptible visuellement par l'oeil (13.2; 113.2) gauche des deuxièmes données (11.2; 111.2) d'image, qui lui sont envoyées.

7. Système (3; 103) suivant la revendication 6,
**caractérisé en ce que**
la au moins une commande (6; 106) d'appareil est constituée pour transformer les données (5.1, 5.2; 105.1, 105.2) de processus fournies dans des parties (15.1, 15.2; 115.1, 115.2) du traitement à deux canaux, en des données (11.r, 11.1; 111.r, 111.1) d'image droite et gauche, qui correspondent à la considération monoscopique d'images produites à partir du même angle visuel de l'événement de processus.

8. Système (30) suivant la revendication 7,
**caractérisé en ce que**
la au moins une commande (6) d'appareil est constituée pour envoyer à la lunette (8) d'affichage les données (11.r) d'image droite, comme premières données (11.1) d'image, et les données (11.L) d'image gauche, comme deuxièmes données (11.2) d'image.

9. Système (103) suivant la revendication 7,
**caractérisé en ce que**
la au moins une commande (106) d'appareil est constituée pour transformer les données (111.r, 111.1) d'image droite et gauche dans d'autres parties (116.1, 116.2) de traitement à deux canaux, en d'autres données (111.R, 111.L) d'image droite et gauche, qui correspondent à la considération stéréoscopique d'images produites à partir d'angles visuels différents de l'événement de processus.

10. Système (103) suivant la revendication 9,
**caractérisé en ce que** la au moins une commande (106) d'appareil est constituée pour envoyer à la lunette (108) d'affichage les autres données (111.R) d'image droite, comme premières données (111.1) d'image, et les autres données (111.L) d'image gauche, comme deuxièmes données (111.2) d'image.

11. Système (1; 101) de sécurité ferroviaire, comprenant au moins un dispositif (2; 102) de sécurité ferroviaire, constitué pour émettre des données (5.1, 5.2; 105.1, 105.2) de processus correspondant à son évènement de processus et comprenant un système (3; 103), constitué pour afficher, à l'aide des données (5.1, 5.2; 105.1, 105.2) de processus fournies, l'événement de processus du au moins un dispositif (2; 102) de sécurité ferroviaire,
**caractérisé en ce que**
le système (3; 103) est constitué suivant l'une des revendications 6 à 10.
